# EUROPÄISCHE PATENTSCHRIFT

(11) **EP 0 916 031 B1**
(45) Veröffentlichungstag und Bekanntmachung des Hinweises auf die Patenterteilung: **17.05.2000**
(21) Anmeldenummer: 97922813.7
(22) Anmeldetag: 25.03.1997
(51) Int. Cl.: F16C 11/10

(54) **GELENK FÜR VERSCHWENKBARE TEILE EINES KINDERWAGENS, EINES RASENMÄHERS ODER EINES ÄHNLICHEN KLEINFAHRZEUGES**
ARTICULATION FOR PIVOTABLE PARTS OF A PUSHCHAIR, LAWN-MOWER OR SIMILAR SMALL VEHICLE
ARTICULATION POUR PIECES PIVOTANTES D'UNE POUSSETTE, D'UNE TONDEUSE A GAZON OU D'UN PETIT VEHICULE SIMILAIRE

(30) Priorität: 06.08.1996 DE 19631776
(43) Veröffentlichungstag der Anmeldung: 19.05.1999
(73) Patentinhaber: Tolges Kunststoffverarbeitung GmbH & Co. KG, 34414 Warburg (DE)
(72) Erfinder: TOLGES, Peter, D-34414 Warburg (DE)
(74) Vertreter: WALTHER, WALTHER & HINZ Patentanwälte
(86) Internationale Anmeldenummer: DE9700600
(87) Internationale Veröffentlichungsnummer: WO9805876

(56) Entgegenhaltungen:
- FR-A- 2 050 733
- GB-A- 1 586 869
- US-A- 4 151 753
- US-A- 5 183 447

## Beschreibung

Die Erfindung betrifft ein Gelenk für verschwenkbare Teile eines Kinderwagens, eines Rasenmähers oder eines ähnlichen Kleinfahrzeuges, mit aus mindestens zwei relativ zueinander beweglichen Gehäuseteilen mit jeweils einer Gelenkachse, wobei die Gehäuseteile ein Planetengetriebe aufnehmen, und wobei die Gehäuseteile eine mit dem Planetengetriebe gekoppelte und feststellbare Achse aufweisen, die aus mindestens dem einen Gehäuseteil ragt.

An einem Kinderwagen befinden sich die unterschiedlichsten verschwenkbaren Teile; beispielhaft sei hier nur genannt das Gelenk für die Verdeckverstellung eines Kinderwagens, die Schieberverstellung oder aber die Fußkastenverstellung. Die Verschwenkung derartiger Teile erfolgt, wie bereits ausgeführt, über Gelenke, wobei die Gelenke entweder durch Klemmverbindungen in einer beliebigen Stellung feststellbar sind, oder aber die Gelenke sind so ausgebildet, daß die verschwenkbaren Teile ausschließlich in ein, zwei oder drei Stellungen fixierbar sind.
Klemmverbindungen haben insbesondere den Nachteil, daß diese bei häufigem Gebrauch relativ schnell verschleißen. Sind die verschwenkbaren Teile hingegen nur in ein, zwei oder drei Stellungen fixierbar, dann ist in den seltensten Fällen eine optimale Stellung des Teiles zu erreichen.

Aus der GB-A-15 86 869 ist ein Gelenk der eingangs genannten Art für eine Sitzverstellung bekannt; hierbei wird durch eine federnde Scheibe die Verdrehung der Achse gegenüber den Gehäuseteilen verhindert, sofern nicht durch einen Drehknopf das Gelenk gelöst wird. Es handelt sich hierbei demzufolge ebenfalls um eine Klemmverbindung, die demzufolge auch nicht verschleißfrei arbeitet.

Der Erfindung liegt daher die Aufgabe zugrunde, ein Gelenk für verschwenkbare Teile eines Kinderwagens, eines Rasenmähers oder eines ähnlichen Kleinfahrzeuges zu schaffen, das eine stufenlose Verstellung ermöglicht und darüber hinaus keinerlei Verschleiß unterliegt.

Die Aufgabe wird bei einem Gelenk der eingangs genannten Art erfindungsgemäß dadurch gelöst, daß das eine Gehäuseteil, aus dem die feststellbare Achse ragt, ein als Zahnrad ausgebildetes Hohlrad aufweist, wobei die Achse ein Griffteil mit einem Zahnkranz besitzt, der bei Feststellung der Achse in Eingriff mit dem Hohlrad steht. Durch die Verwendung eines Planetengetriebes in Verbindung mit einer derart feststellbaren Achse wird erreicht, daß ein verschleißfreies kontinuierliches Verstellen des Gelenkes möglich ist. Der Zahnkranz und das Hohlrad dienen in Verbindung mit dem Griffteil dazu, die aus dem Gehäuse ragende Achse festzustellen und somit die beiden Gehäuseteile und damit die beiden Gelenkachsen in einer beliebigen Position zu fixieren.

Im einzelnen ist vorgesehen, daß das Planetengetriebe ein Hohlrad, das insbesondere feststehend an einem der Gehäuseteile angeordnet ist, drei Planetenräder und ein Sonnenrad umfaßt. Hierbei nimmt das Sonnenrad die feststellbare aus dem mindestens einem Gehäuseteil ragende Achse auf.

Vorteilhaft ist das Griffteil mit der Achse starr verbunden.

Nach einem weiteren besonderen Merkmal der Erfindung weist das Planetengetriebe ein Übersetzungsverhältnis zwischen 1:1 und 1:10 auf, wobei durch das Übersetzungsverhältnis die Selbsthemmung des Planetengetriebes bestimmbar ist. Dies ist insofern von Vorteil, als hierdurch die Möglichkeit eröffnet wird, beispielsweise bei der Schieberverstellung, zunächst die gewünschte Position des Schiebers anzustellen, um dann, wenn diese Position erreicht ist, mittels des Griffteils die Fixierung der beiden Gehäusehälften vorzunehmen. Unter "Schieber " wird hierbei die Schubstange, beispielsweise des Kinderwagens, verstanden.

Anhand der Zeichnung wird die Erfindung nachstehend beispielhaft näher erläutert.
- Figur 1: zeigt das Gelenk in einer Seitenansicht;
- Figur 2: zeigt das Gelenk in einer explosionsartigen Darstellung;
- Figur 3: zeigt eine Ansicht gemäß der Linie III/III aus Figur 2;
- Figur 4: zeigt eine Ansicht gemäß der Linie IV/IV aus Figur 2;

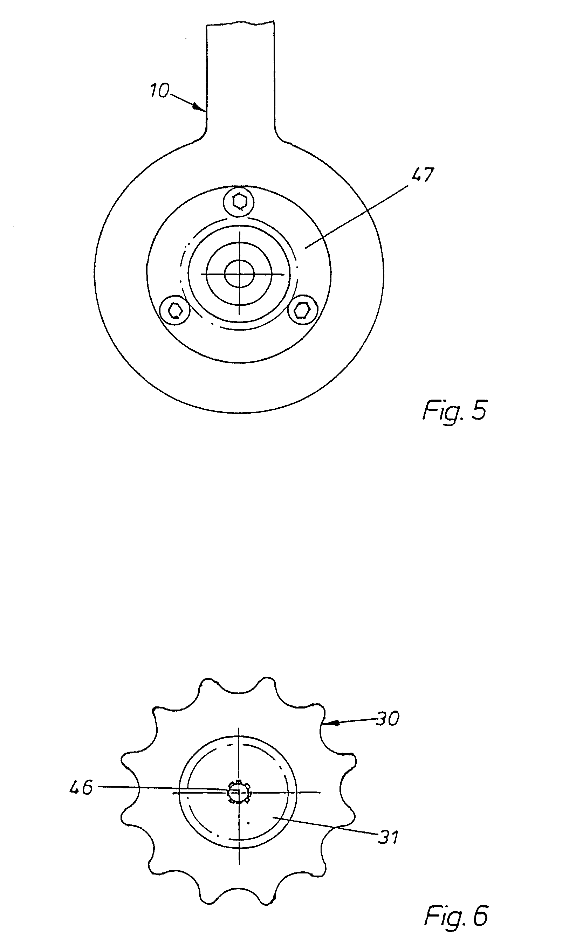

- Figur 5: zeigt eine Ansicht gemäß der Linie V/V aus Figur 2;
- Figur 6: zeigt eine Ansicht gemäß der Linie VI/VI aus Figur 2.

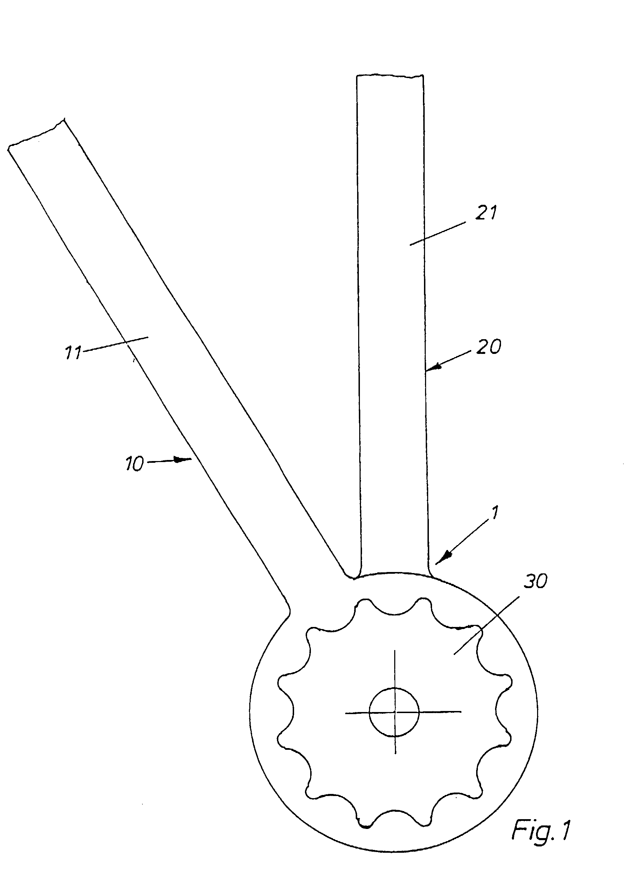

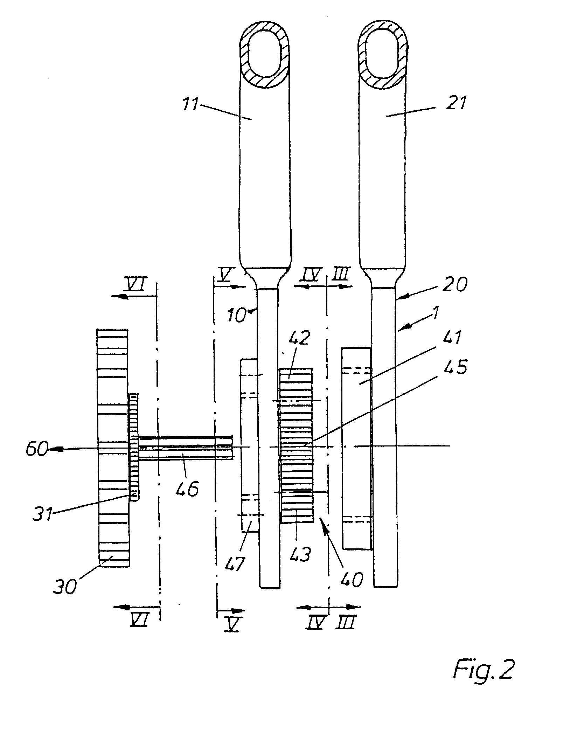

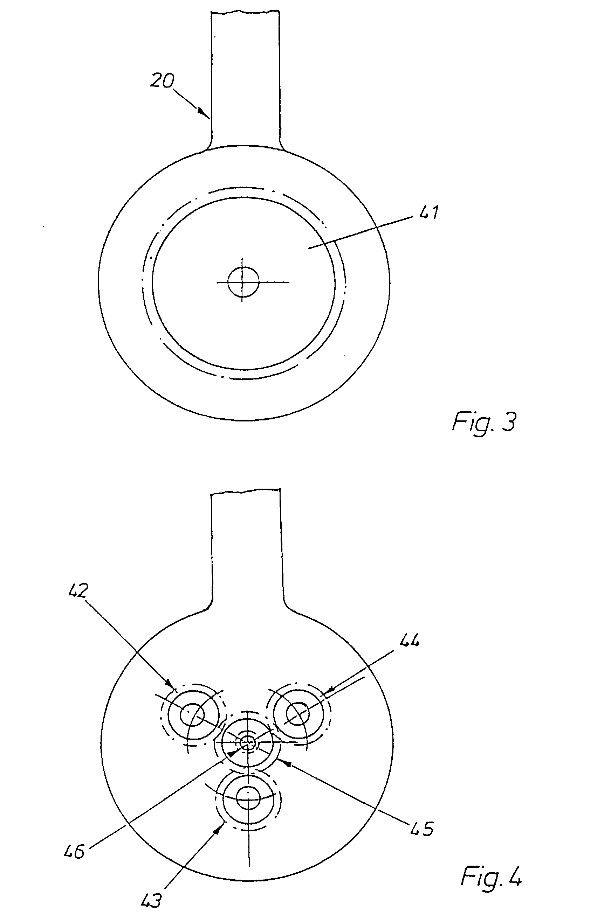

Bei der Darstellung gemäß Figur 1 sind die beiden das Gelenk 1 bildenden Gehäuseteile mit 10 und 20 bezeichnet. Auf dem Gehäuseteil 10 befindet sich das Griffteil 30 in Form eines Verstellrades. Die beiden Gehäuseteile 10, 20 des Gelenks 1 weisen endseitig jeweils Gelenkachsen 11,21 auf, wobei die eine Achse der Befestigung an dem Kinderwagengestell (nicht dargestellt) und die andere Achse zur Befestigung des zu verstellenden Teiles, beispielsweise eines Verdecks eines Kinderwagens dient. Die beiden Gehäuseteile 10, 20 nehmen das insgesamt mit 40 bezeichnete Planetengetriebe auf (Fig 2). Das Planetengetriebe 40 besteht aus einem an dem Gehäuseteil 20 angeordneten Hohlrad 41, das sowohl drei Planetenräder 42 - 44 (siehe auch Figur 4) als auch das Sonnenrad 45 aufnimmt, wobei das Sonnenrad 45 mit den drei Planetenrädern 42 - 44 kämmt. Das Sonnenrad 45 nimmt die Achse 46 auf, die drehsteif mit dem Sonnenrad 45 verbunden ist. Die Achse 46 ist darüber hinaus mit dem Griffteil 30 verbunden, wobei am Griffteil 30 ein Zahnkranz 31 angeordnet ist, der sich zentrisch zu der Achse 46 auf dem Griffteil befindet. Auf dem Gehäuse 10 ist ebenfalls zentrisch zu der Achse 46 ein Hohlrad 47 angeordnet, das fest mit dem Gehäuse 10 verbunden ist. Die Achse 46 ist axial in Richtung des Pfeiles 60 mit den Gehäuseteilen verbindbar.

Die Funktionsweise der Vorrichtung ist nun wie folgt:
Die beiden Gelenkachsen 11, 21 sind gegeneinander verschwenkbar, wenn der Zahnkranz 31 außer Eingriff mit dem Hohlrad 47 ist. Ist die gewünschte Verdrehbewegung der beiden Gelenkachsen 11, 21 erfolgt, wird der Zahnkranz 31 in das Hohlrad 47 eingerückt. Hierbei wird dann durch die Achse 46, die einerseits mit dem Zahnkranz 31 und die andererseits mit dem Sonnenrad 45 fest verbunden ist, das Planetengetriebe blockiert. Die Blockade erfolgt dadurch, daß durch das feststehende Sonnenrad und das ebenfalls feststehende Hohlrad 41 die Planetenräder 42 -44 festgesetzt sind.

## Patentansprüche

1. Gelenk, insbesondere für verschwenkbare Teile eines Kinderwagens, eines Rasenmähers oder eines ähnlichen Kleinfahrzeuges, mit mindestens zwei relativ zueinander beweglichen Gehäuseteilen (10, 20) mit jeweils einer Gelenkachse (11, 21), wobei die Gehäuseteile (10, 20) ein Planetengetriebe (40) aufnehmen und wobei die Gehäuseteile (10, 20) eine mit dem Planetengetriebe (40) gekoppelte und feststellbare Achse (46) aufweisen, die aus mindestens dem einen Gehäuseteil (10) ragt,
**dadurch gekennzeichnet, daß**
das eine Gehäuseteil (10), aus dem die feststellbare Achse (46) ragt, ein als Zahnrad ausgebildetes Hohlrad (47) besitzt, wobei die Achse (46) ein Griffteil (30) mit einem Zahnkranz (31) aufweist, der bei Feststellung der Achse (46) in Eingriff mit dem Hohlrad (47) steht

2. Gelenk nach Anspruch 1,
**dadurch gekennzeichnet, daß**
das Planetengetriebe (40) ein Hohlrad (41), drei Planetenräder (42 - 44) und ein Sonnenrad (45) umfaßt.

3. Gelenk nach Anspruch 2,
**dadurch gekennzeichnet, daß**
das Sonnenrad (45) die feststellbare und aus dem mindestens einen Gehäuseteil (10) ragende Achse (46) aufweist.

4. Gelenk nach Anspruch 1,
**dadurch gekennzeichnet, daß**
das Griffteil (30) mit der Achse (46) starr verbunden ist.

5. Gelenk nach Anspruch 1,
**dadurch gekennzeichnet, daß**
das Hohlrad (47) starr an einem Gehäuseteil (10) angeordnet ist.

6. Gelenk nach Anspruch 1,
**dadurch gekennzeichnet, daß**
das Planetengetriebe (40) ein Übersetzungsverhältnis zwischen 1:1 und 1:10 aufweist.

## Claims

1. Articulation, particularly for pivotable parts of a pram, a lawn-mower or a similar small vehicle, with at least two housing parts (10, 20) which may be moved relative to one another and which have one articulation axle each (11, 21), whereas the housing parts (10, 20) receive a planet gear (40) and whereas the housing parts (10, 20) are provided with a lockable axle (46) coupled to the planet gear (40) and protruding out of at least one of the housing parts (10),
**characterized in that** the one housing part (10), out of which the lockable axle (46) is protruding, possesses a ring gear (47) designed as a toothed wheel, whereas the axle (46) has a grip (30) provided with a toothed ring (31) that engages with the ring gear (47) when the axle (46) is locked.

2. Articulation according to claim 1,
**characterized in that** the planet gear (40) comprises a ring gear (47), three planet wheels (42 - 44) and one sun wheel (45).

3. Articulation according to claim 2,
**characterized in that** the sun wheel (45) is provided with the lockable axle (46) which is protruding out of at least one of the housing parts (10).

4. Articulation according to claim 1,
**characterized in that** the grip (30) is rigidly mounted on the axle (46).

5. Articulation according to claim 1,
**characterized in that** the ring gear (47) is rigidly mounted on a housing part (10).

6. Articulation according to claim 1,
**characterized in that** the planet gear (40) has a transmission ratio ranging from 1:1 to 1:10.

## Revendications

1. Articulation, particulièrement pour les pièces pivotantes d'un landau, d'une tondeuse à gazon ou d'un petit véhicule similaire, ayant au moins deux parties de carter (10, 20) mobiles l'une par rapport à l'autre et pourvues chacune d'un axe d'articulation (11, 21), les parties de carter (10, 20) recevant un engrenage planétaire (40) et lesdites parties de carter (10, 20) étant pourvues d'un axe verrouillable (46) couplé à l'engrenage planétaire (40), ledit axe ressortant d'au moins l'une des parties de carter (10),
**caractérisée en ce que** l'une des parties de carter (10), c'est-à-dire celle d'où ressort l'axe verrouillable (46) possède une roue à denture intérieure (47), l'axe (46) étant pourvu d'une poignée (30) avec une couronne (31) qui s'engage dans la roue à denture intérieure (47) quand l'axe (46) est arrêté.

2. Articulation selon la revendication 1,
**caractérisée en ce que** l'engrenage planétaire (40) comprend une roue à denture intérieure (47), trois roues planétaires (42 - 44) et une roue solaire (45).

3. Articulation selon la revendication 2,
**caractérisée en ce que** la roue solaire (45) est pourvue de l'axe verrouillable (46) qui ressort d'au moins une des parties de carter (10).

4. Articulation selon la revendication 1,
**caractérisée en ce que** la poignée (30) est reliée à l'axe (46) de façon rigide.

5. Articulation selon la revendication 1,
**caractérisée en ce que** la roue à denture intérieure (47) est placée de façon rigide sur la partie de carter (10).

6. Articulation selon la revendication 1,
**caractérisée en ce que** l'engrenage planétaire (40) est pourvu d'un rapport de transmission se situant entre 1:1 et 1:10.
